# NEW EUROPEAN PATENT SPECIFICATION

(11) **EP 0 509 062 B2**
(45) Date of publication and mention of the opposition decision: **17.09.2003**
(45) Mention of the grant of the patent: 16.03.1994
(21) Application number: 91909834.3
(22) Date of filing: 16.05.1991
(51) Int. Cl.: G01V 1/20, G01V 1/38

(54) **A METHOD FOR ACQUISITION OF SEISMIC DATA AT SEA**
VERFAHREN ZUR MEERESSEISMISCHENDATENERFASSUNG
PROCEDE D'ACQUISITION DE DONNEES SISMIQUES EN MER

(30) Priority: 22.05.1990 NO 902258
(43) Date of publication of application: 21.10.1992
(73) Proprietor: WesternGeco A.S., 4056 Tananger (NO)
(72) Inventor: BALE, Richard, N-4005 Stavanger (NO); McMILLAN, Ian, Houston, TX 77077 (US)
(74) Representative: Robinson, John Stuart
(86) International application number: PCT/NO91/00071
(87) International publication number: WO 91/018302

(56) References cited:
- GB-A- 1 245 041
- GB-A- 1 580 835
- GB-A- 2 149 110
- GB-A- 2 149 503
- US-A- 3 747 056
- US-A- 3 806 863
- US-A- 4 316 266
- Brochure: "Simultaneous Vibroseis Multisource Acquisition", Compagnie Générale du Géophysique, Technical Series No. 564.87.04 published in April 1987
- "Introduction to Geophysical Prospecting" by Milton B. Dobrin & Carl H. Savit - Fourth Edition, pages 135 to 137, McGraw-Hill, published 1988
- "Encyclopedic Dictionary of Exploration Geophysics", pages 157, 163 and 199, 2nd Edition published 1984 by the Society of Exploration Geophysicists
- Brochure: "Coordinated Two-Vessel Surveying" by Western Geophysical Company, published in 1984
- "A Novel 3-D Marine Acquisition Technique" by D.S. Davidson et al, 60th Annual International SEG Meeting, September 23-27, 1990
- "Improving the accuracy of marine 3-D seismic surveys", by M.H. Houston, Ocean Industry, January 1987

## Description

The invention concerns a method for acquisition of seismic data from an area which is to be surveyed by using at least two seismic energy sources and at least two seismic receivers, and the invention particularly concerns the acquisition of seismic data from a marine area where several seismic energy sources together with receiver cables, so-called streamers, are towed through the area.

Seismic surveys are conducted according to the principle that a seismic signal is transmitted from an energy source, the signal is reflected from geological strata and the reflection recorded in a receiver which is preferably placed at a distance from the transmitter. In the case of symmetrical reflection the reflection point will lie midway between the source and the receiver and this point is called the CDP (Common Depth Point).

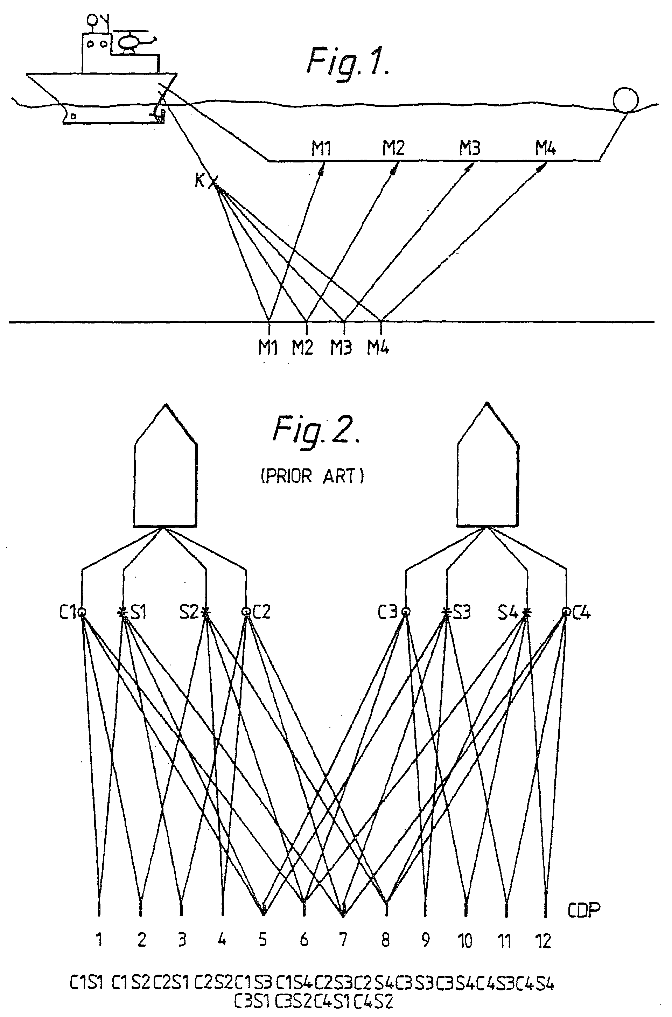

In marine seismic surveys a survey is made of a particular area of the sea, in that the seismic vessel tows behind it a set of seismic energy sources together with receiver equipment which is placed in a so-called streamer cable. In principle, from several seismic energy sources pulses are transmitted, which are reflected from the seabed and the reflected signals recorded by equipment designed for this purpose fitted in the streamer, from which the signals are transferred on board the vessel for storage or processing. The vessel surveys the area by sailing back and forward along lines until a complete picture has been obtained of the geophysical conditions in the area. The principle of a survey of this nature is Illustrated in the attached fig. 1. Surveys of land areas can be conducted according to the same principle, but the following description refers exclusively to marine surveys, by means of which the principle of the invention can most easily be demonstrated.

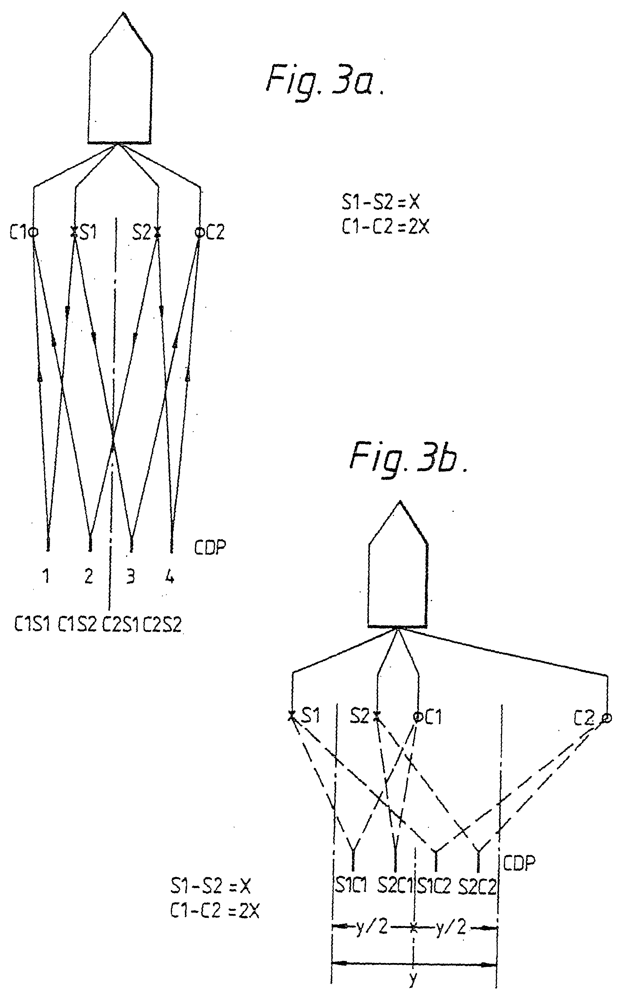

In order to rationalise such a seismic survey of an area, and to ensure that the survey is conducted as quickly and efficiently as possible in order to obtain a correct picture of the area, a number of different methods have been developed. For this purpose a method has been used of towing behind a ship an array, in which the use of several seismic sources and several streamers is combined. The individual cables in which the receiver elements are provided, will be positioned in a distance from each other in order to cover the widest possible area during each pass along a line. In order to further rationalise and increase the efficiency of the seismic data acquisition, method has also been utilised where two ships sail alongside each other as Illustrated in the attached fig. 2 With such a constellation of sources and recording equipment, i.e. streamers, the seismic energy sources have in principle been placed on the inside of the array and the streamers on the outside. It has thereby been possible to receive signals from the sources S1, S2, S3, S4 in each of the streamers C1, C2, C3 and C4 and thus obtain a pattern of up to twelve CDP-lines for seismic recordings, thereby achieving coverage of a relatively wide line area with one pass.

The arrays which have been used, such as that illustrated in fig. 2, have provided a relatively wide coverage area of CDP-lines, but optimum coverage has not been achieved since overlaps will occur as illustrated in fig. 2, orthe CDP-lines can be left with different spacings, which can to some extent cause problems when processing the acquired data.

Problems have also arisen if seismic energy sources or one of the streamer cables fails during the recording, causing gaps to occur in the outlined line pattern, i.e. one or more of the said CDP-lines are missing resulting in an incomplete picture of the desired area. This has resulted in the same area having to be covered again in order to obtain the required line density, an operation which is both time consuming and expensive.

Both of these factors have thus generated a need to find a solution where sources and streamer cables are arranged in such a pattern in relation to one another that the CDP- lines provide an optimum coverage area or width, thus enabling the coverage of the area to be recorded to be conducted as quickly as possible. Should faults occur in the equipment during the survey, due to the increased coverage width there will sill be advantages over the previously used methods since this method is based on a greater coverage width and it will normally only be necessary to repeat the recording in a part of the previous area.

According to the present invention, there is provided a method for acquisition of seismic data as defined in appended Claim 1.

Preferred embodiments of the invention are defined in the other appended claims.

It is thus possible to provide a method by which seismic energy sources and seismic receiver equipment can be arranged in such a relationship to one another that a maximum coverage width is obtained during the recording.

It is further possible to provide a positional constellation of seismic energy sources and streamers for a marine survey in such away that in the event of a fault a reorganisation can be performed in a simple and time-saving manner, thus enabling full coverage to be maintained of an albeit narrower area or the missing CDP-lines to be left in such a way that on a return pass full coverage can be obtained while at the same time maintaining a maximum width of acquisition.

Thus, it is possible to obtain the maximum possible coverage width for the acquisition a recording of data with CDP-lines which lie equally spaced from one another and with the desired density.

It is further possible to provide an array of streamers and energy sources which supplies an absolutely even line pattern with parallel CDP-lines a where those lines which are generated by the interaction between the respective sources and receivers give an optimum number of lines. It will therefore be possible to achieve a marked increase in capacity with the same technical equipment which was used previously and by using larger or more towing vessels a substantial increase in width can be achieved for the survey. As an example, reference can be made to the constellation illustrated as prior art in fig. 2. With the equipment shown there, by proceeding in accordance with the invention, it will be possible to record 16 lines of data alongside one another, while to date it has only been possible to record a maximum of 12 such lines. This represents a dear increase in capacity. In the event of faults in the equipment, for special combinations, it will be possible by means of a simple transfer, i.e. alteration of the distance between sources or sources and streamers, or streamers, to obtain a distribution which enables recording to continue, albeit with fewer lines, but with closely spaced lines, thus avoiding the necessity of making an accurate repeat pass of the same area at a later date. In the case of the normally occurring faults, i.e. failure either of a streamer or an energy source, it will still be possible to obtain up to 12 recording lines, i.e. a result will be obtained which is at least as good as that achieved by the previously used technique.

It can be mentioned that previous attempts have also been made to make such measurements more efficient Thus in US 4868793, a method is described where seismic recording elements or individual sources are used in each area (array)/point source as elements in adjacent sources, so that the geometrical point for the source can be varied sequentially. However, this is a relatively complicated method and does not provide the same width coverage as the invention. In UK 1193507 a vertical positioning of receivers is described, but the same problems arise here in the case of faulty equipment as in the recognized technique. In UK 1285769 an acquisition technique is described where two or more boats are used. In this case, however, the operation is conducted with a separate boat for the seismic energy sources and a separate boat for streamers and recording. With this kind of constellation it will not be possible to achieve the advantages in accordanace with the invention. In US 3921124 a combination is described of two sources and one streamer, but here too no attempt has been made to solve those problems which form the basis of the present invention In UK 1580835 the use of several sources and several receivers is described. Here a correlation programme is used in order to distinguish which data samples/traces are to be compared. However, no description is given here of any geometrical arrangement combining several energy sources and receivers in the same way as in the invention.

"Introduction to Geophysical Prospecting", Milton B. Dobrin, Carl H. Savitt, McGraw Hill, 1988, pp 135-137 discloses the use of two sources and two receiver arrays arranged to give uniformly spaced surface lines.

A more detailed description of the invention will be presented in the following section by means of embodiments illustrated in the drawings. The drawings illustrate:
Fig. 1 the principle of acquisition of seismic data which forms the basis of both recognized technique and the present invention.
Fig. 2 illustrates recognized technique for seismic surveys using two vessels and for recording of twelve lines of seismic data with one pass of a marine area.
Figs. 3a and 3b are two examples with two energy sources and two receiver cables, with a symmetrical and an asymmetrical positioning respectively,
Fig. 4a is an illustration of positioning possibilities for sources/receivers using the invention, with sources and cables exchanged in the lower part of the illustration,
Fig. 4b is an embodiment achieved by the invention,
Figs. 4c-4f are various examples which illustrate the positioning of groups, based on the illustration in fig. 4a.
Fig. 5 illustrates an embodiment for the invention,
fig. 6 shows the embodiment in fig. 5, but with one streamer out of operation, and
Fig. 7 shows the embodiment in fig. 5, but with one of the seismic energy sources out of operation, this figure also illustrating the pass of the marine area in two directions.

As already described above, fig. 1 illustrates the basic principle of acquisition of seismic data from the seabed, with the wave propagation path shown. For reasons of simplicity only the seabed and reflection together with a flat seabed are illustrated here. A vessel tows a seismic energy source K which is illustrated as a point source which at a given point in time will transmit a seismic pulse which is reflected in the points M1'-M4'. From these points signals are reflected up to the seismic streamer which records reflections in four receiver channels M1-M4. Fig. 2 illustrates the method used until now where two ships sail alongside each other and where the signals which are transmitted from four energy sources S1-S4 are recorded by hydrophones in four streamers C1-C4. Due to the mutual positioning, data will be recorded along twelve lines where data, e.g. from source S1 is recorded in streamer C1-C4, and further that signals which are transmitted from source S2 and which are reflected from the seabed are also recorded in streamer C1 etc. so that a line pattern is created which is illustrated at the bottom of the figure.

It can be seen that in the central area there will be an overlap of four recording lines which will thus cover the same line two by two. This is not an optimum utilization of expensive technology and will only offer security to the data recorded in the central area if any of the sources should fail.

It has been discovered, therefore, that by reorganizing the streamers and seismic energy sources a marked improvement in efficiency of acquisition can be obtained.

Fig. 3a illustrates an example of this. Behind a ship (not shown) are towed two energy sources which can be single sources or groups of streamers arranged in so-called "arrays" and which are indicated by S1 and S2 (S = Source). These are arranged at a relative distance from each other equal to x. In addition to these sources S1 and S2, behind the vessel are also towed two streamer cables C1 and C2 which have a relative distance from each other equal to 2x. The distance between the centre of the sources and the centre of the cables is indicated by y. In the symmetrical arrangement this distance between the source centre and the cable centre will be 0. The principle is illustrated with two elements in each group, but there can also be 3, 4, etc.

Sources and cables can also be arranged alongside one another as illustrated in fig. 3b. The same spacing conditions as described in connection with fig. 3a also apply here. The groups of sources or cables correspond to the minimum number of elements usable in the groups indicated by first and second in the claims. In the drawing the sources are indicated by *, while cables are indicated by a circle. It is completely within the scope of the invention to exchange cables and sources. The invention does however not include the embodiment Illustrated on fig. 3 as this figure only is meant to illustrate the principle.

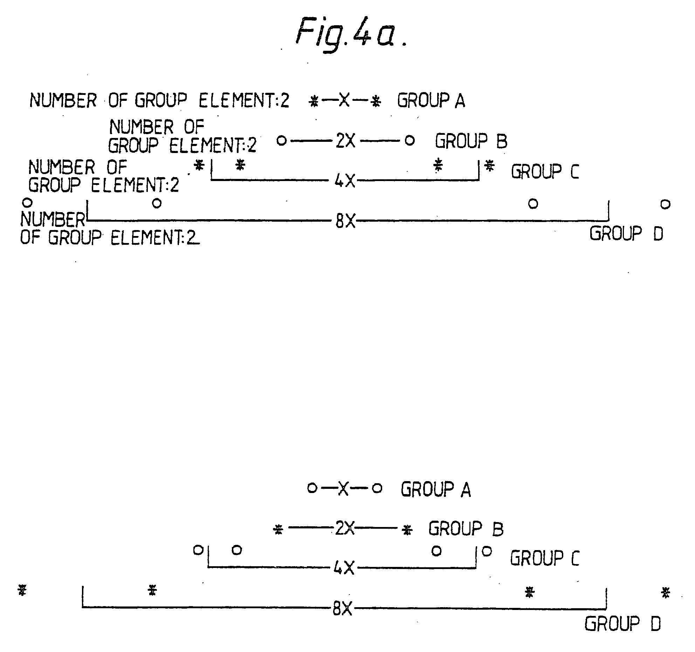

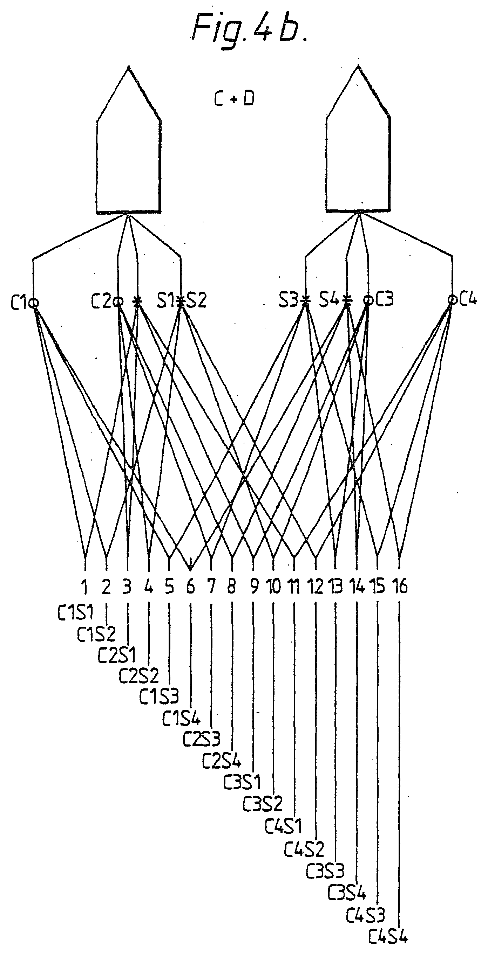

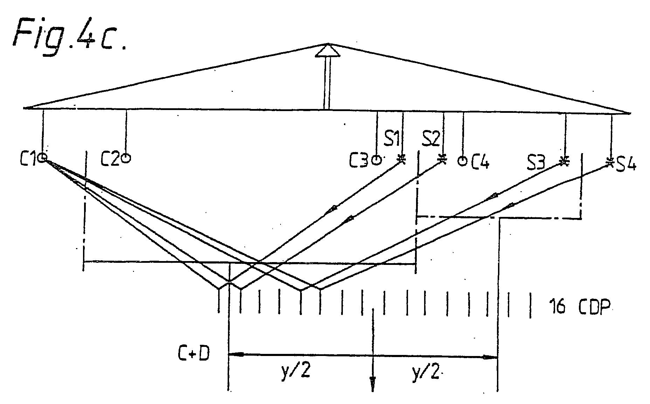

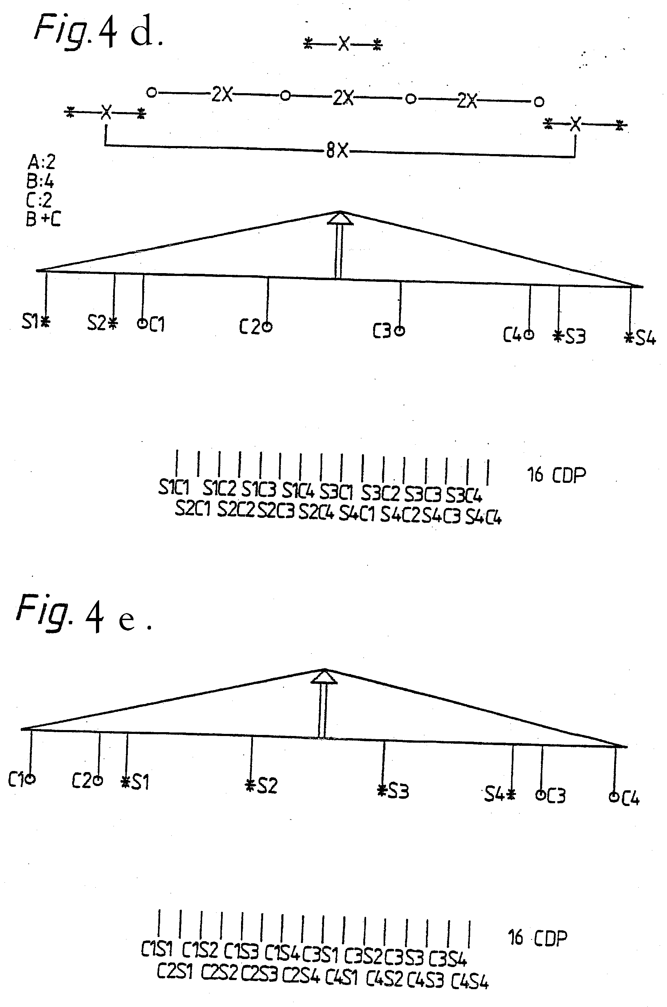

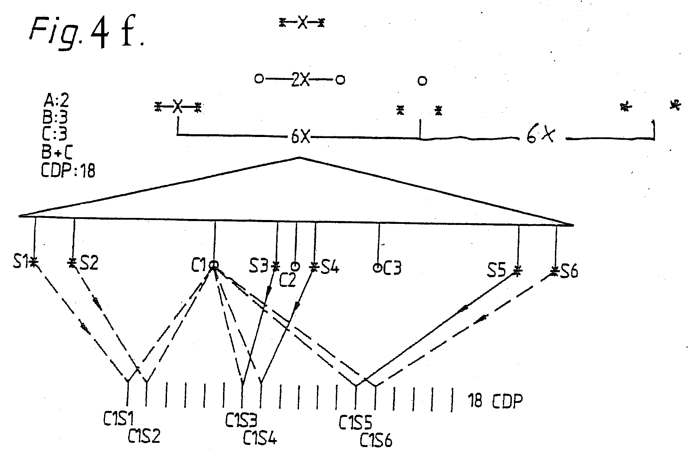

Fig. 4 illustrates how the principle which is indicated schematically in fig. 3 can be applied to create a more wide-ranging or broader acquisition system for seismic data. The different groups are indicated by A, B, C, D and illustrate a build-up originating from the smallest possible grouping, consisting of two sources in fig. 4a (see the upper part of the drawing) and two cables (shown in the lower part of the drawing). Group B shows two such cables (upper part, fig. 4a) and two sources (lower part, fig.4b), the distance between the elements in B being twice the distance in group A, (where two elements are used in the group A). Had three elements been used in group A the distance in group B would have been three times the distance in group A. This system is further developed in group C, the groups A being applied as units and deployed as two group elements, since four elements are now used so that the distance between the groups will now be four times the distance between the elements in group A. The distance is measured between median lines or centre lines.

In the same way a further development is made from group B to group D where the distance consequently is 8x, if the distance between the elements in group A is x. This principle can be continued for an arbitrary length. As an example of a practical embodiment according to the invention sources and cables can be deployed in accordance with the combination of group C and group D in fig. 4b.

Those CDP-lines which are recorded will be symmetrical to the tow/constellation since sources and cables are arranged symmetrically.

Fig. 4c illustrates an asymmetrical positioning of sources and cables, where the same combination of groups C and D is used as described above, but in this case the groups are positioned displaced laterally to each other. This will give exactly the same pattern of CDP-lines as in the symmetrical arrangement The lines, i.e. the CDP-lines, will be placed symmetrically in relation to the midpoint of the distance between the centre lines in the source arrangement and the cable arrangement Should a displacement occur in the towing constellation, this will mean a displacement of the line positioning since the centering line for the CDP-line will be displaced, but the measurements will not be altered.

In this case it is important to ensure that the spacing between sources and between cables is maintained, i.e. the distance x and multiplied distances of x must be kept constant, i.e. these values must not be altered.

Fig. 4d illustrates a method using two elements of group A, four elements/units from group B, and two elements consisting of groups A as group C, after which the created groups B and C are combined. Fig. 4e shows the same example with exchange of sources and cables and this figure also illustrates the CDP-line coverage obtained with 16 lines.

Fig. 4f illustrates the use of the method in connection with an uneven number of sources/receivers in the groups. In fig. 4f there has been used two elements in group A, three elements in group B (distance 2x) and three elements in group C (distance 2x·3=6x). The number of CDP-lines will be 18.

It should be evident from these illustrations that it is possible to gradually achieve the potential widths which can still be obtained in practice with the aid of towing vessels at sea or where the limits are set by what can be processed by computer. As mentioned earlier, in all the illustrated embodiments and also the other possible combinations which can be obtained by the method, an exchange of sources and cables can be performed, the vital factor being that this should be done completely i.e. by exchanging all sources with cables and vice versa.

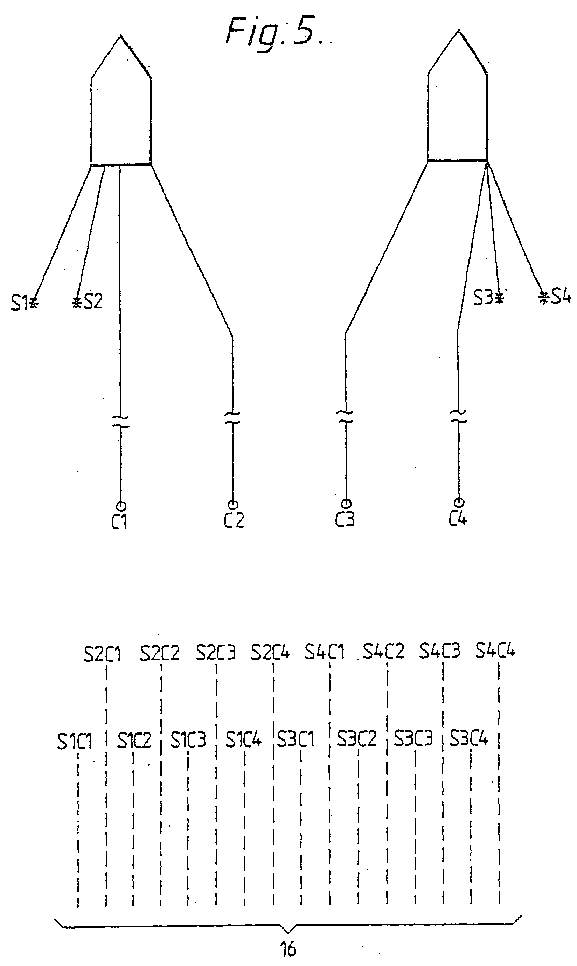

Thus fig. 5 illustrates an array with two boats alongside each other as was also illustrated in fig.2, with the seismic energy sources being placed on the outside of the array, while the streamers are placed in the centre, i.e. in accordance with the invention (and also as shown on fig. 4b). This reorganization means that there is no longer any overlapping of recording lines as in the embodiment in fig. 2 and a recording coverage 16 lines wide is obtained. Should any faults occur in the equipment during the survey, this can be compensated for as illustrated in the following figures.

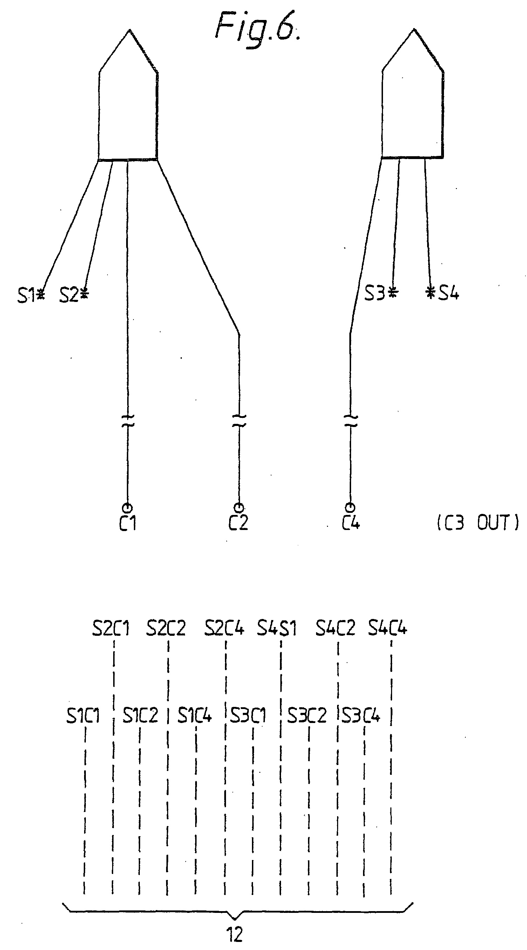

Fig. 6 shows the same arrangement as in fig. 5, but in this case a fault has arisen in the streamer which was called C3, so that it no longer functions. The streamer can then be taken on board the ship and repaired or replaced with another streamer. In the meantime the survey can continue, since all that is required is to transfer the remaining streamer C4 from one of the vessels together with the two energy sources, so that they are positioned as illustrated in fig. 6. Streamer C4 has thus been transferred to the position previously held by streamer C3. The energy sources S3 and S4 have been moved so that the distance between them remains x with 2x corresponding to the spacing between two streamer cables as illustrated between streamer C2 and streamer C4. The distance between source S3 which lies closest to the streamer and the streamer C4 is set at x/2. If a line diagram is now drawn at the bottom in the same way as in fig. 3, twelve lines will be shown, which corresponds to the previously used technique, but with these twelve lines at an equal and even distance from one another, so that a complete picture of this strip is obtained. In other words, even after a fault has arisen a complete coverage has been obtained of a relatively wide area. When the ship returns and surveys the next line width of the marine area, it can sail into this area with twelve lines, thus achieving maximum utilization of the ship.

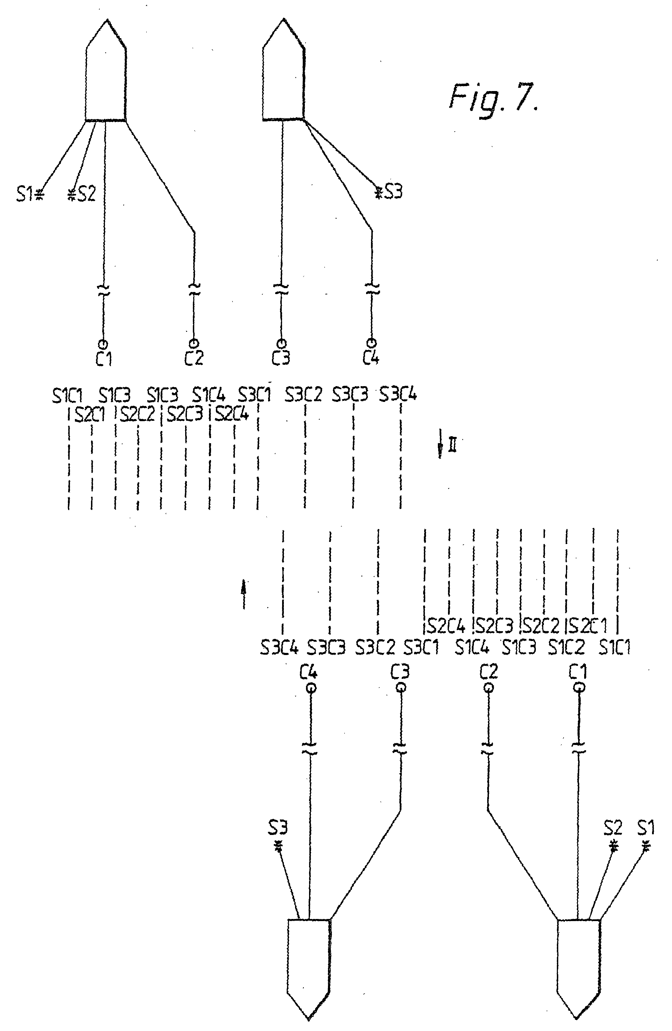

Fig. 7 illustrates the case where one of the seismic energy sources has failed. As illustrated in the upper part of the figure, in this case too it will be possible to record twelve lines, but three of these lines will have double the required spacing. This pattern is achieved by, e.g., transferring energy source S4 to the position of energy source S3 if it was energy source S3 which failed. What has been achieved in this case is to concentrate the lower degree of coverage on a peripheral area of the survey, thereby easily compensating for this greater width when making recordings in the opposite direction by making the boat sail in the manner illustrated in the lower part of the figure. In this way it can be seen that "gaps" in the recording lines can be covered, thus obtaining a complete picture with dense and even coverage all the way, thereby avoiding the necessity of making a pass of exactly the same area twice. Should the fault arise on the wrong side of the ship in relation to the survey direction, the ships can change places or the sources can be re-deployed. Thus it can be seen that by the special positioning of the energy source/streamer in accordance with the invention clear advantages can be achieved in relation to the method previously used, and a rational and efficient as well as a complete acquisition of seismic data can be achieved for a desired marine area.

Many modifications for positioning of sources and streamers in relation to each other will be possible on the basis of the special basic constellation in accordance with the invention.

## Claims

1. A method of acquisition of seismic data from a marine area which is to be surveyed by towing at least two seismic energy sources and at least two streamer cables, wherein the energy sources and streamer cables are arranged in accordance with only two groups which form part of the following series:
a first group comprising at least two elements of a first type in a linear array arranged substantially transversely to the direction of travel with a spacing X between all adjacent elements, wherein the first elements are either sources or streamer cables;
a second group comprising at least two elements of a second type different to the first type arranged in a linear array arranged substantially transversely to the direction of travel with a spacing between all adjacent elements equal to the product of X and the number of elements in the first group;
an Nth group where N is greater than 2, comprising a linear array of elements of the first type when N is odd and of the second type when N is even, arranged substantially transversely to the direction of Travel, the array having at least two subgroups each consisting of the N-2th group and the spacing between all mid-points of adjacent subgroups being equal to the spacing between adjacent elements of the N-1th group multiplied by the number of elements in the N-1th group for N = 3, or to the spacing between the mid-points of adjacent subgroups of the N-1 th group multiplied by the number of subgroups in the N-1 th group for N = 4,
**characterised in that** the sources and streamer cables are arranged in accordance with the positions determined by the second and third groups or by the third and fourth groups.

2. A method as claimed in Claim 1, **characterised in that**:
two subgroups each consisting of two sources with a lateral distance X between the two sources, are arranged with a lateral distance 8 X between the mid-points of the two subgroups, and four streamer cables are arranged with a lateral distance 2 X between all adjacent streamer cables.

3. A method as claimed in Claim 1, **characterised in that**:
two subgroups each consisting of two streamer cables with a lateral distance X between the two streamer cables, are arranged with a lateral distance 8 X between the mid-points of the two subgroups, and four sources are arranged with a lateral distance 2 X between all adjacent sources.

4. A method as claimed in Claim 1, **characterised in that**:
two subgroups each consisting of two sources with a lateral distance X between the sources, are arranged with a lateral distance 4 X between the mid-points of the two subgroups, and two subgroups each consisting of two streamer cables with a lateral distance 2 X between the streamer cables, are arranged with a lateral distance 8 X between the mid-points of the two subgroups.

5. A method as claimed in Claim 1, **characterised in that**:
two subgroups each consisting of two streamer cables with a lateral distance X between the streamer cables, are arranged with a lateral distance 4 X between the mid-points of the two subgroups, and two subgroups each consisting of two sources with a lateral distance 2 X between the sources, are arranged with a lateral distance 8 X between the mid-points of the two subgroups.

6. A method as claimed in Claim 1, **characterised in that**:
two subgroups each consisting of two sources with a lateral distance X between the sources, are arranged with a lateral distance 6 X between the mid-points of the two subgroups,
and three streamer cables are arranged with a lateral distance 2 X between all adjacent streamer cables.

7. A method as claimed in Claim 1, **characterised in that**:
two subgroups each consisting of two streamer cables with a lateral distance X between the streamer cables, are arranged with a lateral distance 6 X between the mid-points of the two subgroups,
and three sources are arranged with a lateral distance 2 X between all adjacent sources.

8. A method as claimed in any one of the preceding claims,
**characterised in that**:
the mid-point of the two groups used do not coincide.

9. A method as claimed in any one of the preceding claims,
**characterised in that**:
the two groups do not overlap.

10. A method as claimed in any one of the preceding claims,
**characterised in that**:
seismic signals generated by the group of sources are detected at the group of streamer cables, and recorded.

11. A method as claimed in Claim 1, **characterised in that** all sources are located at the outmost parts of a total seismic array consisting of the seismic equipment being towed and that the streamer cables are towed in parallel tracks in the middle of the seismic array, while an equal spacing is maintained between the streamer cables.

12. A method as claimed in Claim 11, **characterised in that**:
the energy sources which lie closest to the streamer cables
on each side of them each have a distance from the nearest streamer cables equal to 1/4 of the spacing between the streamer cables.

13. A method as claimed in claim 12, **characterised in that**: the energy sources on both sides of the total seismic array have a distance between the energy sources which is 1/2 of the distance between two adjacent streamer cables.

## Patentansprüche

1. Verfahren zur Erfassung seismischer Daten aus einem Seegebiet, das durch Entlangziehen von mindestens zwei seismischen Energiequellen und von mindestens zwei Streamerkabeln erkundet werden soll, wobei die Energiequellen und die Streamerkabel entsprechend nur zwei Gruppen angeordnet sind, die Bestandteil der folgenden Serie sind:
eine erste Gruppe, umfassend mindestens zwei Elemente einer ersten Art in einer linearen Anordnung, die im wesentlichen quer zur Fahrtrichtung mit einem Abstand X zwischen allen benachbarten Elementen angeordnet ist, wobei die ersten Elemente entweder Energiequellen oder Streamerkabel sind;
eine zweite Gruppe, umfassend mindestens zwei Elemente einer zweiten Art, die von der linear angeordneten ersten Art verschieden ist, die im wesentlichen quer zur Fahrtrichtung mit einem Abstand zwischen allen benachbarten Elementen positioniert ist, der gleich dem Produkt von X und der Anzahl von Elementen in der ersten Gruppe ist;
eine N-te Gruppe, bei der N größer ist als 2, umfassend eine lineare Anordnung von Elementen der ersten Art, wenn N ungerade ist, und der zweiten Art, wenn N gerade ist, die im wesentlichen quer zur Fahrtrichtung angeordnet ist, wobei die Anordnung mindestens zwei Untergruppen besitzt, die jeweils aus der N-2ten Gruppe bestehen, wobei für N=3 der Abstand zwischen allen Mittelpunkten benachbarter Untergruppen gleich dem Abstand zwischen benachbarten Elementen der N-1ten Gruppe multipliziert mit der Anzahl von Elementen in der N-1ten Gruppe ist, oder für N=4 gleich dem Abstand zwischen den Mittelpunkten benachbarter Untergruppen der N-1ten Gruppe multipliziert mit der Anzahl von Untergruppen in der N-1ten Gruppe;
**dadurch gekennzeichnet, daß** die Energiequellen und Streamerkabel gemäß den durch die zweite und dritte Gruppe oder durch die dritte und vierte Gruppe ermittelten Positionen angeordnet werden.

2. Verfahren nach Anspruch 1, **dadurch gekennzeichnet, daß** zwei Untergruppen, jede bestehend aus zwei Energiequellen mit einem seitlichen Abstand X zwischen den beiden Energiequellen, mit einem seitlichen Abstand von 8 X zwischen den Mittelpunkten der beiden Untergruppen angeordnet sind, und daß vier Streamerkabel mit einem seitlichen Abstand von 2 X zwischen allen benachbarten Streamerkabeln angeordnet sind.

3. Verfahren nach Anspruch 1, **dadurch gekennzeichnet, daß** zwei Untergruppen, jede bestehend aus zwei Streamerkabeln mit einem seitlichen Abstand X zwischen den zwei Streamerkabeln, mit einem seitlichen Abstand von 8 X zwischen den Mittelpunkten der beiden Untergruppen angeordnet sind, und daß vier Energiequellen mit einem seitlichen Abstand von 2 X zwischen allen benachbarten Energiequellen angeordnet sind.

4. Verfahren nach Anspruch 1, **dadurch gekennzeichnet, daß** zwei Untergruppen, jede bestehend aus zwei Energiequellen mit einem seitlichen Abstand X zwischen den Energiequellen, mit einem seitlichen Abstand von 4 X zwischen den Mittelpunkten der beiden Untergruppen angeordnet sind, und daß zwei Untergruppen, jede bestehend aus zwei Streamerkabeln mit einem seitlichen Abstand von 2 X zwischen den Streamerkabeln, mit einem seitlichen Abstand von 8 X zwischen den Mittelpunkten der beiden Untergruppen angeordnet sind.

5. Verfahren nach Anspruch 1, **dadurch gekennzeichnet, daß** zwei Untergruppen, jede bestehend aus zwei Streamerkabeln mit einem seitlichen Abstand X zwischen den Streamerkabeln, mit einem seitlichen Abstand von 4 X zwischen den Mittelpunkten der beiden Untergruppen angeordnet sind, und daß zwei Untergruppen, jede bestehend aus zwei Energiequellen mit einem seitlichen Abstand von 2 X zwischen den Energiequellen, mit einem seitlichen Abstand von 8 X zwischen den Mittelpunkten der beiden Untergruppen angeordnet sind.

6. Verfahren nach Anspruch 1, **dadurch gekennzeichnet, daß** zwei Untergruppen, jede bestehend aus zwei Energiequellen mit einem seitlichen Abstand X zwischen den Energiequellen, mit einem seitlichen Abstand von 6 X zwischen den Mittelpunkten der beiden Untergruppen angeordnet sind, und daß drei Streamerkabel mit einem seitlichen Abstand von 2 X zwischen allen benachbarten Streamerkabeln angeordnet sind.

7. Verfahren nach Anspruch 1, **dadurch gekennzeichnet, daß** zwei Untergruppen, jede bestehend aus zwei Streamerkabeln mit einem seitlichen Abstand X zwischen den Streamerkabeln, mit einem seitlichen Abstand von 6 X zwischen den Mittelpunkten der beiden Untergruppen angeordnet sind, und daß drei Energiequellen mit einem seitlichen Abstand von 2 X zwischen allen benachbarten Energiequellen angeordnet sind.

8. Verfahren nach einem der vorhergehenden Ansprüche, **dadurch gekennzeichnet, daß** die Mittelpunkte der beiden verwendeten Gruppen nicht zusammenfallen.

9. Verfahren nach einem der vorhergehenden Ansprüche, **dadurch gekennzeichnet, daß** sich die beiden Gruppen nicht überdecken.

10. Verfahren nach einem der vorhergehenden Ansprüche, **dadurch gekennzeichnet, daß** von der Gruppe von Energiequellen erzeugte seismische Signale an der Gruppe von Streamerkabeln erfaßt und aufgezeichnet werden.

11. Verfahren nach Anspruch 1, **dadurch gekennzeichnet, daß** alle Energiequellen an den äußersten Abschnitten einer seismischen Gesamtanordnung gelegen sind, die aus der gezogenen seismischen Ausrüstung besteht, und daß die Streamerkabel in parallelen Spuren in der Mitte der seismischen Anordnung gezogen werden, während zwischen den Streamerkabeln ein gleicher Abstand beibehalten wird.

12. Verfahren nach Anspruch 11, **dadurch gekennzeichnet, daß** die Energiequellen, die am nächsten bei den Streamerkabeln auf jeder Seite derselben liegen, jeweils einen Abstand von den nächstgelegenen Streamerkabeln aufweisen, der gleich 1/4 des Abstandes zwischen den Streamerkabeln ist.

13. Verfahren nach Anspruch 12, **dadurch gekennzeichnet, daß** die Energiequellen auf beiden Seiten der seismischen Gesamtanordnung einen Abstand zwischen den Energiequellen aufweisen, der die Hälfte des Abstands zwischen zwei benachbarten Streamerkabeln beträgt.

## Revendications

1. Procédé d'acquisition de données sismiques d'une zone marine à étudier en remorquant au moins deux sources d'énergie sismique et au moins deux câbles de flûte, dans lequel les sources d'énergie et les câbles de flûte sont disposées conformément à seulement deux groupes faisant partie de la série suivante:
un premier groupe comprenant au moins deux éléments d'un premier type dans une formation linéaire disposée sensiblement transversalement par rapport au sens de la marche avec un espacement X entre tous les éléments adjacents, dans lequel les premiers éléments sont soit des sources soit des câblas de flûtes ;
un deuxième groupe comprenant au moins deux éléments d'un deuxième type différent du premier type disposés dans une formation linéaire disposée sensiblement transversalement par rapport au sens de la marche avec un espacement entre tous les éléments adjacents égal au produit de X et du nombre d'éléments du premier groupe ;
un Nième groupe ou N est supérieur à 2, comprenant une formation linéaire d'éléments du premier type lorsque N est impair et du deuxième type lorsque N est pair, disposé transversalement par rapport au sens de la marche, la formation ayant au moins deux sous-groupes constitués chacun du N-2^{ième} groupe et l'espacement entre tous les points centraux de sous-groupes adjacents étant égal à l'espacement entre éléments adjacents du N-1ième groupe multipliée par le nombre d'éléments du N-1ième groupe pour N=3 ou à l'espacement entre les points centraux de sous-groupes adjacents du N-1ième groupe multiplié par le nombre de sous-groupes dans le N-1ème groupe pour N=4, **caractérisé par le fait que** les sources et les câbles de flûtes sont disposées conformément aux positions déterminées par, pour N=3, le second et le troisième groupes ou par le troisième et le quatrième groupes.

2. Procédé selon la revendication 1, **caractérisé en ce que** deux sous-groupes constitués chacun de deux sources avec une distance latérale X entre les deux câbles de flûte, sont disposés avec une distance latérale 8X entre les points centraux des deux sous-groupes, et quatre câbles de flûte sont disposés avec une distance latérale 2X entre tous les câbles de flûte adjacents.

3. Procédé selon la revendication 1, **caractérisé en ce que** deux sous-groupes constitués chacun de deux câbles de flûte ayant une distance latérale X entre les deux câbles de flûte, sont disposés avec une distance latérale 8X entre les points centraux des deux sous-groupes, et quatre sources sont disposées avec une distance latérale 2X entre toutes les sources adjacentes.

4. Procédé selon la revendication 1, **caractérisé en ce que** deux sous-groupes constitués chacun de deux sources ayant une distance latérale X entre les sources, sont disposés avec une distance latérale 4X entre les points centraux des deux sous-groupes, et deux sous-groupes constitués chacun de deux câbles de flûte ayant une distance latérale 2X entre les câbles de flûte, sont disposés avec une distance latérale 8X entre les points centraux des deux sous-groupes.

5. Procédé selon la revendication 1, **caractérisé en ce que** deux sous-groupes constitués chacun de deux câbles de flûte ayant une distance latérale X entre les câbles de flûte, sont disposés avec une distance latérale 4X entre les deux points centraux des deux sous-groupes, et deux sous-groupes constitués chacun de deux sources ayant une distance latérale 2X entre les sources, sont disposés avec une distance latérale 8X entre les points centraux des deux sous-groupes.

6. Procédé selon la revendication 1, **caractérisé en ce que** deux sous-groupes constitués chacun de deux sources ayant une distance latérale X entre les sources, sont disposés avec une distance latérale 6X entre les points centraux des deux sous-groupes, et trois câbles de flûte sont disposés avec une distance latérale 2X entre tous les câbles de flûte adjacents.

7. Procédé selon la revendication 1, **caractérisé en ce que** deux sous-groupes constitués chacun de deux câbles de flûte ayant une distance latérale X entre les câbles de flûte, sont disposés avec une distance latérale 6X entre les points centraux des deux sous-groupes, et trois sources sont disposés avec une distance latérale 2X entre toutes les sources adjacentes.

8. Procédé selon l'une quelconque des revendications précédentes, **caractérisé en ce que** les points centraux des deux groupes utilisés ne coïncident pas.

9. Procédé selon l'une quelconque des revendications précédentes, **caractérisé en ce que** les groupes ne se chevauchent pas.

10. Procédé selon l'une quelconque des revendications précédentes, **caractérisé en ce que** des signaux sismiques générés par le groupe de sources sont détectés au groupe de câbles de flûte, et enregistrés.

11. Procédé selon la revendication 1, **caractérisé en ce que** toutes les sources sont situées aux confins d'une formation sismique complète constituée par le matériel sismique en remorquage et **en ce que** les câbles de flûte sont remorqués dans des voies parallèles au milieu de la formation sismique, tandis qu'un espacement égal est maintenu entre les câbles de flûte.

12. Procédé selon la revendication 11, **caractérisé en ce que** les sources d'énergie situées les plus près des câbles de flûte et de part et d'autre de celles-ci sont à une distance des câbles les plus proches égale à un ¹/₄ de l'espacement entre les câbles de flûte.

13. Procédé selon la revendication 12, **caractérisé en ce que** les sources d'énergie des deux côtés de la formation sismique complète, ont une distance entre elles égale à la ¹/₂ de la distance entre deux câbles de flûte adjacents.
